# DEMANDE DE BREVET EUROPEEN

(11) **EP 4 376 132 A1**
(43) Date de publication de la demande: **29.05.2024**
(21) Numéro de dépôt: 23211476.9
(22) Date de dépôt: 22.11.2023
(51) Int. Cl.: H01M 8/008, C25B 15/00, H01M 8/1004, H01M 8/10

(54) **PROCÉDÉ DE DÉSASSEMBLAGE D'UN ASSEMBLAGE MEMBRANE-ÉLECTRODES D'UNE PILE À COMBUSTIBLE**

(30) Priorité: 22.11.2022 FR 2212171
(71) Demandeur: Commissariat à l'énergie atomique et aux énergies alternatives, 75015 Paris (FR)
(72) Inventeur: ROUGEAUX, Isabelle, 38054 GRENOBLE CEDEX 09 (FR); BILLY, Emmanuel, 38054 GRENOBLE CEDEX 09 (FR); CHAPUIS, Marlène, 38054 GRENOBLE CEDEX 09 (FR); FEYDI, Pierre, 38054 GRENOBLE CEDEX 09 (FR); NAYOZE-COYNEL, Christine, 38054 GRENOBLE CEDEX 09 (FR)
(74) Mandataire: Cabinet Nony

(57) **Abrégé**

Procédé de désassemblage d'au moins un assemblage membrane-électrodes d'une pile à combustible, le procédé comprenant :
a) la fourniture d'au moins un assemblage membrane-électrodes comprenant des couches de diffusion de gaz anodique et cathodique, une couche anodique, une couche cathodique et une membrane d'échange de protons prise en sandwich entre les couches anodique et cathodique et entre les couches de diffusion de gaz anodique et cathodique; et
b) la mise en contact de l'assemblage membrane-électrodes avec un fluide de désassemblage apte à imprégner et induire une expansion volumique de la membrane, la pression relative du fluide de désassemblage étant supérieure ou égale à 50 kPa, afin de réduire la force de cohésion entre au moins deux desdites couches et/ou entre la membrane et au moins une desdites couches en contact avec la membrane.

## Description

### Domaine technique

La présente invention concerne le domaine du recyclage des piles à combustible. Plus précisément, elle concerne un procédé de désassemblage d'un assemblage membrane-électrodes (connu sous l'acronyme « AME ») d'une pile à combustible à membrane d'échange de protons connue selon l'acronyme anglais PEMFC (« Proton Exchange Membrane Fuel Cell »).

### Technique antérieure

Le principe de fonctionnement d'une pile PEMFC repose sur la conversion de l'énergie chimique en énergie électrique par réaction catalytique d'un combustible, généralement l'hydrogène, et d'un oxydant, généralement l'oxygène. La réaction catalytique est opérée dans une cellule. Une pile PEMFC comprend au moins une cellule.

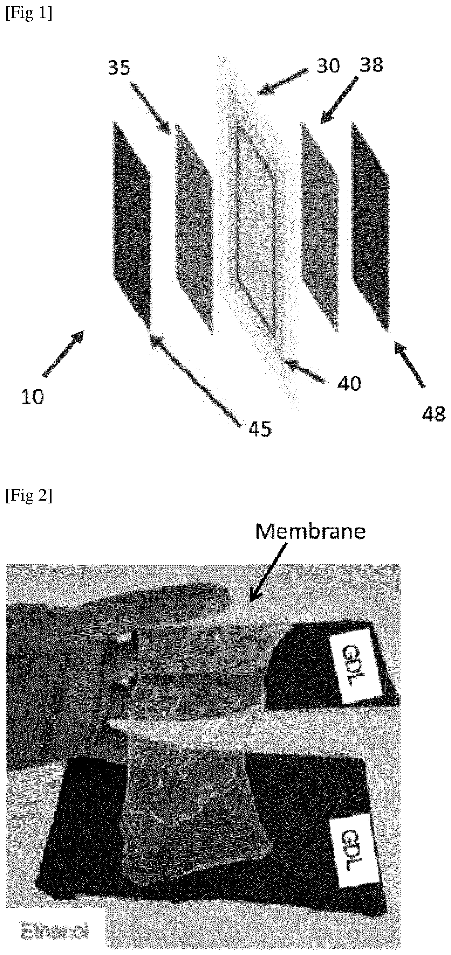

Comme représenté en figure 1 illustrant un exemple d'assemblage membrane-électrodes, chaque cellule comprend un assemblage membrane-électrodes 10 comportant une couche anodique 35 et une couche cathodique 38, séparées et portées par un électrolyte sous la forme d'une membrane d'échange de protons 40 généralement à base de polymère. Les couches anodique 35 et cathodique 38 comportent chacune un catalyseur et sont le lieu des réactions électrochimiques anodique et cathodique. L'assemblage membrane-électrodes comporte en outre de part et d'autre de la membrane des couches de diffusion de gaz (GDL pour « Gas Diffusion Layer » en langue anglaise) anodique 45 et cathodique 48 disposées respectivement du côté de la couche anodique 35 et de la couche cathodique 38 par rapport à la membrane. Les couches de diffusion de gaz anodique 45 et cathodique 48 collectent le courant électrique et permettent l'alimentation en gaz réactif, et l'élimination de l'eau et de la chaleur produites au sein de l'assemblage membrane-électrode. L' assemblage membrane-électrode peut en outre comporter un renfort et/ou un joint 30 afin d'assurer l'étanchéité de l'AME au combustible et à l'oxydant.

Plusieurs types d'AME sont connus.

L'assemblage membrane-électrode peut être de type « CCM », acronyme anglais de « Catalyst Coated Membrane ». Un AME de type CCM est obtenu par dépôt des couches anodique et cathodique de part et d'autre de la membrane d'échange de protons, les couches de diffusion de gaz étant ensuite disposées sur les couches anodique et cathodique.

Un autre assemblage membrane-électrode connu est de type « CCB », acronyme anglais de « Catalyst Coated Backing ». Un AME de type CCB est obtenu par dépôt d'une couche anodique ou d'une couche cathodique sur les couches de diffusion de gaz. Cet ensemble est appelé « GDE », acronyme anglais de « Gas Diffusion Electrode ». Une GDE anodique et une GDE cathodique sont ensuite appliquées de part et d'autre de la membrane d'échange de protons. Un pressage à chaud de l'AME est nécessaire pour assurer un assemblage efficace entre les couches de diffusion de gaz et la membrane.

Afin de réduire l'impact environnemental et le coût des matières premières pour la fabrication des AME, leur recyclage est généralement recherché. A cette fin, il a été proposé de désassembler les AME afin de récupérer et séparer leurs différents éléments.

US 5,718,984 A décrit par exemple la récupération d'une membrane électrolytique de cellule de pile à combustible. La récupération est effectuée avec du méthanol et du peroxyde d'hydrogène qui sont toxiques et/ou non respectueux de l'environnement. Le méthanol ne peut pas être réutilisé en raison d'une réaction de dissolution. Il est également connu que le peroxyde d'hydrogène génère la dégradation des membranes électrolytiques.

US 8,124,261 B2 décrit un procédé de recyclage des éléments d'un assemblage membrane-électrodes d'une pile PEMFC. Le procédé comporte une première étape de déchiquetage de l'AME, ce qui rend les étapes de séparation des éléments de l'AME et leur réutilisation ultérieure complexes.

Carmo et al., International Journal of Hydrogen Energy 44, 3450-3455 (2019) décrit un procédé de recyclage de membranes revêtues de catalyseurs (dites CCM) utilisées pour l'électrolyse de l'eau. Un tel procédé est cependant inadapté au cas d'un AME mis en oeuvre dans une cellule d'une pile à combustible.

Ainsi, il existe un besoin pour un procédé de mise en oeuvre simple, de récupération des différents éléments constitutifs d'un AME d'une pile PEMFC en vue de les réutiliser pour la fabrication d'une nouvelle pile PEMFC. Il existe en outre un besoin pour un procédé de récupération polyvalent, *i.e.* efficace pour la plupart, voire pour n'importe lequel, des AME des piles PEMFC connues.

### Exposé de l'invention

L'invention vise à satisfaire au moins partiellement ces besoins.

Elle concerne un procédé de désassemblage d'au moins un assemblage membrane-électrodes d'une pile à combustible, le procédé comprenant :
a) la fourniture d'au moins un assemblage membrane-électrodes comprenant des couches de diffusion de gaz anodique et cathodique, une couche anodique, une couche cathodique et une membrane d'échange de protons prise en sandwich entre les couches anodique et cathodique et entre les couches de diffusion de gaz anodique et cathodique ; et
b) la mise en contact de l'assemblage membrane-électrodes avec un fluide de désassemblage apte à imprégner et induire une expansion volumique de la membrane, la pression relative du fluide de désassemblage étant supérieure ou égale à 50 kPa, afin de réduire la force de cohésion entre au moins deux desdites couches et/ou entre la membrane et au moins une desdites couches en contact avec la membrane.

Au sein de l'assemblage, par couches, sauf indication contraire, on entend au moins deux couches quelconques parmi la couche anodique, la couche cathodique et les couches de diffusion de gaz anodique et cathodique.

A la connaissance des inventeurs, la mise en oeuvre d'un fluide de désassemblage sous pression n'avait jamais été envisagée pour désassembler un assemblage membrane-électrode.

Ainsi, le fluide de désassemblage sous pression atteint la membrane au travers des couches de diffusion de gaz et des couches cathodique et anodique. La membrane est alors imprégnée par le fluide de désassemblage ce qui génère une expansion volumique de la membrane. Le transfert du fluide au sein de l'assemblage induit une réduction de la force de cohésion entre les couches ou entre les couches et la membrane. Il est alors possible de séparer les couches et/ou la membrane les unes des autres.

Le procédé peut permettre de désassembler les couches et la membrane d'un assemblage membrane-électrodes tout en conservant leur intégrité physique, notamment en ce qui concerne les couches de diffusion de gaz et la membrane. Les couches et la membrane récupérées peuvent ainsi être réutilisées pour former un nouvel AME de pile PEMFC.

Le procédé permet en outre le désassemblage de la plupart des AME connus. En particulier, il est adapté au désassemblage d'AME de type CCM et d'AME de type CCB.

Le procédé est également respectueux de l'environnement en ce qu'il génère peu voire aucun déchet et que le fluide de désassemblage peut être réutilisé, au moins en partie voire totalement.

Enfin, il permet un désassemblage rapide de l'AME.

Par « pression relative », on entend la différence P_{fluide}-P₀ entre la pression absolue du fluide de désassemblage P_{fiuide} et la pression atmosphérique P₀.

L'aptitude d'un fluide à imprégner et induire une expansion volumique de la membrane peut être évaluée par détermination du volume de la membrane avant et après mise en contact de la membrane avec le fluide.

Dans la suite du texte, par « couches catalytiques », sauf indication contraire, on entend désigner l'une et/ou l'autre des couche cathodique, dite encore couche catalytique cathodique, et couche anodique, dite encore couche catalytique anodique.

### Brève description des dessins

L'invention est illustrée au moyen du dessin annexé, présentant des exemples non limitatifs de mise en oeuvre de l'invention, dans lequel :
[Fig 1] représente schématiquement un exemple d'assemblage membrane-électrodes dans lequel les différentes couches sont séparées les unes des autres par soucis de lisibilité ;
[Fig 2] est une photographie montrant les GDL et la membrane séparées à l'issue du procédé selon l'invention, tel que décrit en exemple 1 ;
[Fig 3] est une photographie montrant les éléments constitutifs d'une cellule comportant un AME de 25 cm² séparés à l'issue du procédé selon l'invention, tel que décrit en exemple 3 ;
[Fig 4] sont deux photographies illustrant la séparation manuelle d'une GDL et de l'ensemble couches catalytiques et membrane de l'AME décrite en exemple 4, et
[Fig 5] est une photographie présentant différents éléments constitutifs d'une cellule comportant un AME de 150 cm² séparés à l'issue de la mise en oeuvre du procédé selon l'exemple 4.

### Description détaillée

A l'étape a), l'assemblage membrane-électrode peut être de type CCM ou de type CCB. En particulier, l'assemblage membrane-électrodes peut être obtenu par un procédé comportant une étape de pressage à chaud.

La membrane d'échange de protons peut être choisie parmi les exemples de membrane décrits dans S. Lyonnard (Membranes pour piles à combustible : structure et transport. Apport de la diffusion neutronique. Collection SFN 11 177-197, 2010, DOI: 10.1051/sfn/201011011).

La membrane d'échange de protons peut comporter, voire consister en, un polymère perfluoré, de préférence un polymère perfluoré sulfoné, en particulier comportant d'une chaîne principale fluoro-carbonée, notamment perfluorée, par exemple de type polytétrafluoroéthylène (PTFE) telles que les chaînes de type Téflon^{®}, sur laquelle sont greffées des chaînes pendantes, notamment perfluorées, par exemple de type perfluorovinyléther, terminées par un groupe ionique sulfonate. Des exemples de membrane d'échange de proton à base de polymère perfluoré sont les membranes de type Nafion^{®}, Flemion^{™} (Asahi Glass), Aciplex-S^{™} (Asahi Chemical), Dow^{™} (Dow Chemical), Hyflon^{™} (Solvay-Solexis) et Aquivion^{™} (Solvay). Un exemple de membrane d'échange de proton à base de polymère perfluoré sulfoné est la membranes de type Nafion^{®}.

En variante, la membrane d'échange de protons peut être une membrane comportant, voire consistant en, un polymère non fluoré à squelette aromatique, en particulier choisi parmi des polymères comportant des fonctions acide sulfonique, par exemple l'acide polystyrènedivinylbenzène sulfonique, des polymères éthers aromatiques, par exemple les poly(arylène ether sulfone), les polyether ether cétone (PEEK), les polyimides sulfonés (PIs).

En particulier, la membrane d'échange de protons est une membrane composite comportant un polymère tel que décrit précédemment, de préférence comportant un polymère perfluoré sulfoné tel que le Nafion^{®}, dans lequel est incorporé du polytétrafluoroéthylène, par exemple une membrane Gore-Select^{®}.

De préférence, la membrane d'échange de protons peut comporter, voire consister en, un polymère perfluoré sulfoné, notamment peut être une membrane composite ou non composite, le polymère perfluoré sulfoné comportant plus préférentiellement une chaîne principale fluoro-carbonée de type polytétrafluoroéthylène (PTFE) sur laquelle sont greffées des chaînes pendantes de type perfluorovinyléther terminées par un groupe ionique sulfonate. De préférence, la membrane d'échange de proton à base de polymère perfluoré sulfoné est une membrane de type Nafion^{®} ou de type Gore-Select^{®}, notamment de type Nafion^{®}.

La membrane d'échange de protons peut présenter une épaisseur comprise entre 8 µm et 175 µm, en particulier entre 10 µm et 175 µm.

Les couches anodiques et cathodiques comportent respectivement un catalyseur des réactions anodique et cathodique.

La couche anodique peut comporter un catalyseur choisi parmi le platine et des bimétalliques tels que le PtRu et le PtSn, de préférence le platine. De préférence, la couche anodique comporte en outre un ionomère, utile pour la conduction protonique. Elle peut présenter une épaisseur d'au moins 2 µm, en particulier comprise entre 2 et 10 µm.

La couche cathodique peut comporter un catalyseur choisi parmi le platine et des bimétalliques tels que le PtCo et le PtNi, de préférence le platine. De préférence, la couche cathodique comporte en outre un ionomère, utile pour la conduction protonique. Elle peut présenter une épaisseur d'au moins 5 µm, en particulier comprise entre 5 et 20 µm.

Les couches de diffusion de gaz anodique et cathodique sont respectivement en contact de la couche anodique et de la couche cathodique. Elles peuvent être identiques ou différentes. Elles peuvent comporter un substrat, en particulier poreux, plus particulièrement à base de carbone, notamment en papier de carbone ou en fibres de carbone, tissées ou de préférence non tissées, par exemple de diamètre compris entre 7 et 10 µm, et imprégnées avec un agent hydrophobe, notamment de type polytetrafluoroethylene (PTFE), à une teneur pouvant être comprise entre 5 and 30 wt% par rapport à la masse du substrat. Le substrat peut être revêtu sur une face d'une couche microporeuse, dite « MPL », acronyme anglais de « Micro Porous Layer », électroconductrice hydrophobe. En particulier, la couche microporeuse MPL électroconductrice hydrophobe peut comporter un liant polymère hydrophobe, notamment au moins du polytétrafluoroéthylène (PTFE), dans lequel est dispersé un matériau carboné, notamment au moins du noir de carbone et/ou graphite. Les couches de diffusion de gaz peuvent présenter une épaisseur comprise entre 100 et 250 µm. Les couches microporeuses MPL peuvent présenter une épaisseur comprise en 20 et 50 µm.

L'assemblage membrane-électrode peut comporter un empilement de couches formé en succession par la couche de diffusion de gaz anodique, la couche anodique, la membrane, la couche cathodique, et la couche de diffusion de gaz cathodique. En particulier, les couches et la membrane de l'assemblage membrane-électrodes présentent une surface, notamment une surface active, supérieure à 1 cm², en particulier supérieure à 1,8 cm², notamment comprise entre 25 cm² et 150 cm². La surface active correspond à la surface sur laquelle a lieu la réaction électrochimique.

De préférence, à l'étape a), l'AME est issu directement d'une pile PEMFC, notamment usagée. Par exemple, l'AME fourni à l'étape a) n'a subi ni découpage ni broyage préalable. De préférence, le procédé comprend préalablement à l'étape a) une étape de purge de l'assemblage membrane-électrodes par mise en contact dudit assemblage avec un fluide de purge, préférentiellement de l'azote. L'étape de purge vise à purger l'assemblage membrane-électrode des gaz réactifs résiduels, notamment l'hydrogène et l'oxygène, en particulier l'air, par exemple adsorbé sur les couches de l'AME. Cette étape préalable permet de réduire les risques d'inflammation liés au contact entre le ou les catalyseurs des couches catalytiques, notamment le platine, et le fluide de désassemblage, notamment l'éthanol.

De préférence, l'étape a) comporte la fourniture d'une pile à combustible à membrane d'échange de protons comportant un assemblage membrane-électrodes et à l'étape b), l'assemblage membrane-électrodes est mis en contact avec le fluide de désassemblage.

Le procédé peut ainsi aisément être mis en oeuvre pour un assemblage membrane-électrodes directement dans la pile.

De préférence, à l'étape b), le fluide de désassemblage est introduit dans la pile par le ou les canaux d'alimentation en combustible de la pile et/ou par le ou les canaux d'alimentation en oxydant de la pile. De cette façon, le fluide de désassemblage peut circuler sous pression jusqu'aux couches anodique et cathodique respectivement.

L'étape de purge peut comporter l'introduction du fluide de purge dans la pile par le ou les canaux d'alimentation en combustible de la pile et/ou par le ou les canaux d'alimentation en oxydant de la pile.

La pression relative à l'étape b) du fluide de désassemblage peut être supérieure ou égale à 100 kPa.

Elle peut être inférieure ou égale à 5000 kPa, en particulier inférieure ou égale à 500 kPa. Le risque d'endommagement de la membrane sous pression est ainsi réduit.

En particulier, la pression relative à l'étape b) du fluide de désassemblage peut être comprise entre 50 kPa et 5000 kPa, de préférence entre 100 kPa et 500 kPa.

La température du fluide de désassemblage à l'étape b) peut être comprise entre 10 °C et 200 °C, de préférence entre 20 °C et 120 °C.

Le fluide de désassemblage à l'étape b) peut être à l'état liquide ou à l'état gazeux.

Le fluide de désassemblage à l'étape b) peut être à l'état liquide, avec en particulier une pression relative du fluide de désassemblage comprise entre 100 kPa et 500 kPa et une température comprise entre 15 °C et 40 °C.

De préférence, le fluide de désassemblage à l'étape b) est à l'état gazeux, ce qui permet de réduire significativement la quantité de fluide de désassemblage mis en oeuvre au cours du procédé. En particulier, le fluide de désassemblage à l'état gazeux présente une pression relative comprise entre 100 kPa et 1000 kPa et une température comprise entre 65 °C et 120 °C.

Le fluide de désassemblage à l'état gazeux peut être porté à l'équilibre liquide/vapeur, préalablement à l'étape b), par chauffage dans un réacteur sous pression régulé en température, puis injecté dans l'AME, notamment de la pile à combustible, notamment après que l'équilibre est atteint, par ouverture du réacteur sous pression. Au cours de l'étape b), la pression du fluide de désassemblage dans l'AME peut être régulée par une vanne de contrepression en aval de l'AME, notamment de la pile à combustible.

Le fluide de désassemblage peut être choisi parmi les solvants et leurs mélanges, en particulier parmi les solvants polaires et leurs mélanges, de préférence parmi les solvants polaires protiques et leurs mélanges, notamment parmi les alcools et leurs mélanges.

En particulier, le fluide de désassemblage est choisi parmi le diméthylsulfoxyde (DMSO), l'acétone, le N,N-diméthylformamide (DMF), l'acétonitrile, l'acétate d'éthyle, le méthanol, l'éthanol, l'isopropanol, l'eau, l'hexafluoroisopropanol, l'acide formique, l'acide acétique, l'ammoniaque et leurs mélanges. De préférence, le fluide de désassemblage est choisi parmi l'éthanol, l'isopropanol et leur mélange, plus préférentiellement est l'éthanol. Avantageusement, l'isopropanol et l'éthanol sont des fluides de désassemblage respectueux de l'environnement.

En particulier, le fluide de désassemblage peut être apte à induire une expansion volumique de la membrane tout en restant à l'état fluide, notamment à l'état liquide ou à l'état gazeux. Selon la variante où le fluide de désassemblage est à l'état liquide, la mise en contact de l'AME avec le fluide de désassemblage peut être réalisée par immersion de l'AME dans le fluide de désassemblage.

La mise en pression du fluide de désassemblage peut être effectuée au sein d'une enceinte contenant l'AME. Le fluide de désassemblage peut être statique, c'est-à-dire qu'un volume prédéfini dudit fluide est introduit dans l'enceinte. L'AME est par exemple immergé dans le fluide de désassemblage contenu dans une enceinte, la pression relative et la température du fluide étant contrôlées pour atteindre respectivement la pression relative et la température requises.

En variante, le fluide de désassemblage à l'étape b) peut aussi être en circulation. Dans ce cas, l'AME peut être positionné dans un système de circulation de fluide, dans lequel le fluide de désassemblage est injecté sous pression et circule. En particulier, le système de circulation de fluide est en communication fluidique avec un réacteur sous pression, dans lequel la pression du fluide de désassemblage peut être contrôlée, notamment à une pression relative comprise entre 100 kPa et 500 kPa. La pression du fluide de désassemblage dans le système de circulation de fluide peut être régulée par une vanne de contrepression en aval du système de circulation de fluide. Le système de circulation de fluide peut être régulé en température pour maintenir le fluide de désassemblage à une température requise. La circulation du fluide peut être réalisée en boucle fermée ou en boucle ouverte, en particulier en boucle fermée.

Le volume de fluide de désassemblage peut être compris entre 50 mL et 1 L.

La durée de l'étape b) peut être adaptée en fonction de la composition du fluide de désassemblage.

La durée de l'étape b) est par exemple d'une heure au plus, en particulier comprise entre 20 s et 30 min, plus particulièrement entre 5 min et 15 min.

L'étape b) permet avantageusement de réduire la force de cohésion entre au moins deux desdites couches, voire entre toutes lesdites couches en contact, et/ou au moins entre une desdites couches et la membrane voire entre la membrane et toutes les couches au contact de la membrane. En particulier, l'étape b) peut permettre de réduire la force de cohésion entre les couches de diffusion de gaz anodique et cathodique et les couches catalytiques anodique et cathodique respectivement. Elle peut permettre de réduire la force de cohésion entre la membrane et chacune des couches catalytiques anodique et cathodique.

En fin d'étape b), au moins deux desdites couches et/ou la membrane et au moins une des couches au contact de la membrane peuvent être séparées l'une de l'autre.

En variante, au cours d'une étape c) du procédé, postérieure à l'étape b), au moins deux desdites couches et/ou la membrane et au moins une des couches au contact de la membrane entre lesquelles la force de cohésion a été réduite à l'étape b) peuvent être séparées l'une de l'autre. La séparation des couches peut être opérée mécaniquement, notamment manuellement, par exemple en décollant les couches l'une de l'autre, par exemple par étirement, enroulement ou torsion d'une couche, ou par application d'ultrasons.

Par exemple, l'étape c) comprend la séparation des couches catalytiques des GDL anodique et cathodique respectivement, et/ou la séparation des couches catalytiques de la membrane d'échange de protons.

En particulier, l'intégrité des couches de diffusion de gaz anodique et cathodique et/ou de la membrane est conservée au cours du procédé, notamment au cours de l'étape c). Par exemple, les longueur, largeur et épaisseur desdites couches de diffusion de gaz et de la membrane sont sensiblement identiques avant et après l'étape b) et/ou l'étape c), c'est-à-dire qu'elles n'ont pas varié de plus de 5%, notamment pas de plus de 1% par rapport aux longueur, largeur et épaisseur mesurées à l'étape a).

Lorsque l'AME est de type CCM, l'étape c) peut comprendre la séparation de la couche de diffusion de gaz anodique, de la couche de diffusion de gaz cathodique et de l'ensemble formé par les couches cathodique, anodique et la membrane, les couches cathodique et anodique restant solidaires de la membrane d'échange de protons. Lorsque l'AME est de type CCB, l'étape c) peut comprendre la séparation de la membrane, de l'ensemble formé par la couche cathodique et la couche de diffusion de gaz cathodique, et de l'ensemble formé par la couche anodique et la couche de diffusion de gaz anodique, les couches cathodique et anodique restant respectivement solidaires des couches de diffusion de gaz cathodique et anodique.

Les couches catalytiques peuvent être séparées de la couche de diffusion de gaz cathodique, de la couche de diffusion de gaz anodique et/ou de la membrane par immersion dans un bain à ultrasons d'un ensemble comportant au moins une couche catalytique, en particulier par immersion de l'ensemble formé par les couches cathodique, anodique et la membrane, de l'ensemble formé par la couche cathodique et la couche de diffusion de gaz cathodique, ou de l'ensemble formé par la couche anodique et la couche de diffusion de gaz anodique, plus particulièrement de l'ensemble formé par les couches cathodique, anodique et la membrane. Le bain à ultrasons peut contenir de l'éthanol, de l'isopropanol de l'eau ou leurs mélanges, en particulier de l'éthanol.

Le procédé peut comprendre en outre une étape d) consécutive à l'étape b) ou à l'étape c) comportant la récupération des couches de diffusion de gaz anodique et cathodique et de la membrane désolidarisées les unes des autres. De préférence, l'étape d) comporte la récupération des couches de diffusion de gaz anodique et cathodique, des couches anodique et cathodique et de la membrane désolidarisées les unes des autres. En particulier, l'étape d) est réalisée consécutivement à l'étape c). En particulier, la membrane récupérée peut présenter une masse supérieure ou égale à 95% massique, en particulier supérieure ou égale à 99% massique, de la masse initiale de la membrane.

Le procédé peut comprendre en outre une étape e), notamment consécutive à l'étape c) et/ou à l'étape d), de lavage de la membrane, et/ou des couches de diffusion de gaz anodique et cathodique, en particulier par mise en contact avec un liquide de lavage ou par immersion dans un bain à ultrasons, de préférence par immersion dans un bain à ultrasons. Le bain à ultrasons peut contenir de l'éthanol, de l'isopropanol, de l'eau ou leurs mélanges, en particulier de l'éthanol. L'immersion de la membrane, et/ou des couches de diffusion de gaz anodique et cathodique dans un bain à ultrasons peut être réalisée pendant une durée inférieure à 5 min, notamment comprise entre 1 min et 2 min.

Cette étape permet d'éliminer les résidus présents en surface des couches et/ou de la membrane récupérées, ces résidus étant notamment issus des couches de l'AME séparées de ladite couche ou de ladite membrane récupérée.

Les couches et/ou la membrane récupérées peuvent comprendre, consécutivement à l'étape e), moins de 5% en masse, en particulier moins de 1% en masse, voire être dénuées, desdits résidus.

En particulier, l'étape d) et la séparation des couches catalytiques peuvent être réalisées simultanément.

Les couches et/ou la membrane récupérées peuvent être réutilisées, consécutivement à l'étape d) ou, de préférence, à l'étape e) pour fabriquer un nouvel AME. De préférence, les couches et/ou la membrane récupérées peuvent subir au moins un traitement avant leur réutilisation.

En particulier, à l'issue de l'étape b), la pile à combustible peut être démontée. Les différentes couches et la membrane de l'AME présente dans la pile à combustible peuvent être séparées, récupérées et/ou lavées comme détaillé précédemment, notamment par mise en oeuvre des étapes c), d) et/ou e).

Le procédé peut comprendre en outre la récupération du fluide de désassemblage, le fluide de désassemblage récupéré étant en particulier mis en oeuvre dans un procédé selon l'invention. Lorsque le fluide est à l'état gazeux, le fluide de désassemblage peut être récupéré par condensation. La récupération du fluide de désassemblage à l'état gazeux est ainsi facilitée par rapport à un fluide de désassemblage à l'état liquide. Cette étape permet avantageusement de réutiliser le fluide de désassemblage à l'issu du procédé.

### Exemples

### Exemple 1 : Procédé selon l'invention mettant en oeuvre de l'éthanol à l'état liquide

L'exemple ci-après illustre un procédé selon l'invention, qui a été effectué sur 4 AME identiques de type CCB, avec une membrane de dimensions 15 cm x 10 cm.

Ces quatre AME ont été désassemblés par mise en contact de chaque AME avec 1L d'éthanol à l'état liquide en circulation dans les conditions suivantes :
- Pression relative de l'éthanol comprise entre 50 kPa et 500 kPa ;
- Température : 20°C ;
- Durée de mise en contact : 5min.

A l'issue de la mise en contact, les couches de diffusion de gaz anodique et cathodique et la membrane, ont été séparées les unes des autres à la main en tirant la couche de diffusion de gaz anodique et la membrane en directions opposées et en en tirant la couche de diffusion de gaz cathodique et la membrane en directions opposées. Les couches et la membrane ont ensuite été immergées dans un bain d'éthanol et soumis à des ultrasons pendant une durée de 1 min, les couches catalytiques étant ensuite récupérées.

Comme l'illustre la photo de la Figure 2, le traitement par mise en contact avec l'éthanol sous pression, associé à l'immersion dans un bain à ultrasons, a permis de séparer la membrane des couches de diffusion de gaz, et de retirer également les couches catalytiques des couches de diffusion de gaz et de la membrane.

### Exemple 2 : Procédé selon l'invention mettant en oeuvre de l'isopropanol à l'état liquide

L'exemple ci-après illustre la mise en oeuvre du procédé selon l'invention effectué sur un AME identique à celui décrit en exemple 1.

Les conditions opératoires du procédé de désassemblage ont été similaires à celles de l'exemple 1, l'éthanol sous pression étant cependant remplacé par de l'isopropanol sous pression, à l'état liquide. La membrane a été séparée des couches puis récupérée après immersion dans le bain à ultrason contenant de l'isopropanol.

### Exemple 3 : Procédé selon l'invention mettant en oeuvre de l'éthanol à l'état gazeux

L'exemple ci-après illustre la mise en oeuvre du procédé selon l'invention mettant en oeuvre une pile à combustible à membrane d'échange de protons comportant une monocellule, la monocellule comprenant deux plaques monopolaires, deux plaques de serrage, dites encore plaques terminales, et un AME de type CCM comportant:
- un ensemble formé par des couches cathodique, anodique et une membrane d'échange de protons, pris en sandwich entre des GDL cathodique et anodique, la membrane d'échange de protons étant à base de polymère perfluoré sulfoné (PFSA), les couches cathodique et anodique étant de part et d'autre de la membrane et à base de platine, et chaque GDL étant formée de fibres de carbones enchevêtrées, et
- la surface active des différentes couches et de la membrane étant de 25 cm².

De l'argon à l'état gazeux est préalablement injecté dans la pile à combustible, ce qui permet d'évacuer l'oxygène et/ou l'hydrogène résiduels. Le système est ainsi inerté, afin d'éviter l'inflammation pouvant être générée par le contact entre le catalyseur platine des couches catalytiques et la vapeur d'éthanol.

L'éthanol est porté à l'équilibre liquide/vapeur par chauffage dans un réacteur sous pression jusqu'à une température de 100°C. Après que l'équilibre a été atteint, l'éthanol présent dans le réacteur est injecté à l'état gazeux dans la pile à combustible par ouverture du réacteur sous pression, mis en communication fluidique avec les canaux d'alimentation ménagés dans les plaques monopolaires. La pression de l'éthanol dans la pile à combustible est régulée par une vanne de contrepression en aval de la pile à combustible. La circuiterie et la pile à combustible sont maintenues à une température de consigne par des cordons chauffants autour de la pile à combustible pour éviter une condensation de l'éthanol.

L'étape de mise en contact de l'AME et de l'éthanol à l'état gazeux est réalisée dans les conditions suivantes :
- Température de consigne du fluide de désassemblage dans le réacteur : 100°C, la pression absolue atteinte dans le réacteur étant inférieure à 10 bars ;
- Température de consigne des cordons chauffants : 100°C ;
- Volume d'éthanol mis en oeuvre : 50 mL ;
- Durée de mise en contact de l'AME avec l'éthanol, la pression relative de l'éthanol étant maintenue à 100 kPa : 2 min 45 sec.

Suite à la mise en contact de l'éthanol avec l'AME dans la pile à combustible, la monocellule est démontée. Le démontage de la monocellule permet de récupérer l'AME qui a été exposé aux vapeurs d'éthanol.

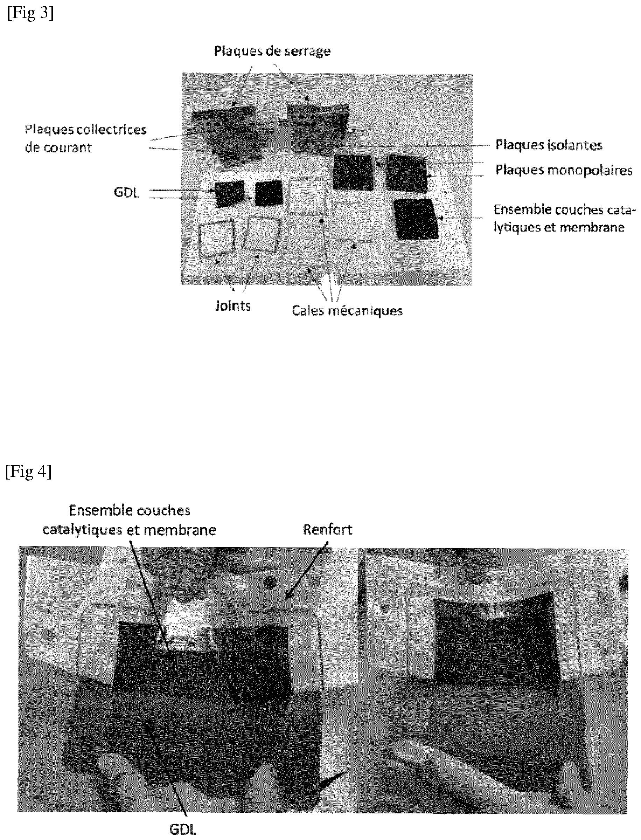

Comme illustré en figure 3, l'AME est très facilement désassemblé en séparant les GDL de l'ensemble formé par les couches catalytiques et la membrane.

Les GDL et l'ensemble formé par les couches catalytiques et la membrane ont un aspect propre et présentent un aspect plus homogène qu'en exemples 1 et 2. L'encre catalytique est restée solidaire de la membrane, ce qui facilite sa séparation et récupération ultérieure par bain à ultrasons.

### Exemple 4 : Procédé selon l'invention mettant en oeuvre de l'éthanol à l'état gazeux

Les conditions opératoires du procédé mis en oeuvre dans cet exemple sont similaires à celles de l'exemple 3, à la différence que la surface de la membrane et la surface des couches de la pile sont de 150 cm², et que les cordons chauffants autour de la pile sont remplacés par une circulation de fluide caloporteur (par exemple de l'eau) au travers des plaques terminales de la monocellule.

L'étape de mise en contact de l'AME et de l'éthanol à l'état gazeux est réalisée dans les conditions suivantes :
- Température de consigne du fluide de désassemblage dans le réacteur : 150°C, la pression absolue atteinte dans le réacteur étant inférieure à 10 bars ;
- Température de consigne du fluide caloporteur : 90°C ;
- Volume d'éthanol mis en oeuvre : 200 ml ;
- Vanne de contrepression ouverte de façon à maintenir une pression absolue de l'éthanol dans la pile à combustible de 200 kPa ;
- Durée de mise en contact de l'AME, la pression absolue de l'éthanol étant maintenue à 200 kPa : 30min.

La figure 4 illustre l'étape de séparation manuelle d'une couche GDL et de l'ensemble formé par les couches catalytiques et la membrane par tirage à la main des deux couches en direction opposée.

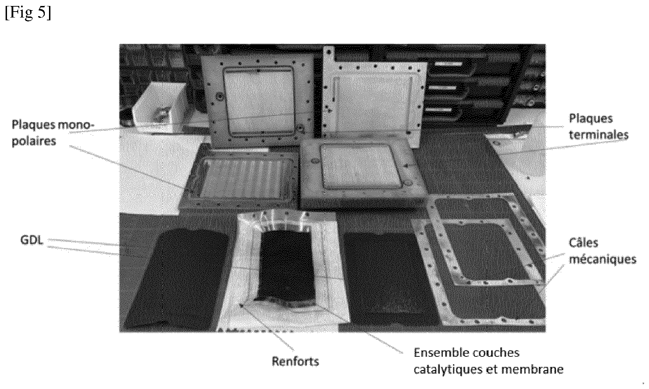

Comme illustré en figure 5, les couches de diffusion de gaz et l'ensemble formé des couches catalytiques et de la membrane sont récupérés désolidarisés les uns des autres à l'issue du procédé.

### Exemple 5 : Procédé hors invention mettant en oeuvre de l'éthanol à l'état liquide

L'exemple ci-après illustre la mise en oeuvre d'un procédé hors invention, effectué sur un AME identique à ceux de l'exemple 1.

L'AME a été mis en contact avec 1 L d'éthanol à l'état liquide à pression atmosphérique dans les conditions suivantes :
- Température : 20°C ;
- Durée de mise en contact d'au moins 5 min et inférieur ou égal à 2h.

L'AME est ensuite immergé dans un bain à ultrasons d'éthanol pendant une durée de 1 à 2 min.

Il n'a été possible ni de séparer la membrane des couches de diffusion de gaz, ni de retirer les couches catalytiques comme en exemple 1.

## Revendications

1. Procédé de désassemblage d'au moins un assemblage membrane-électrodes d'une pile à combustible, le procédé comprenant :
a) la fourniture d'au moins un assemblage membrane-électrodes comprenant des couches de diffusion de gaz anodique et cathodique, une couche anodique, une couche cathodique et une membrane d'échange de protons prise en sandwich entre les couches anodique et cathodique et entre les couches de diffusion de gaz anodique et cathodique ; et
b) la mise en contact de l'assemblage membrane-électrodes avec un fluide de désassemblage apte à imprégner et induire une expansion volumique de la membrane, la pression relative du fluide de désassemblage étant supérieure ou égale à 50 kPa, afin de réduire la force de cohésion entre au moins deux desdites couches et/ou entre la membrane et au moins une desdites couches en contact avec la membrane,
l'intégrité des couches de diffusion de gaz anodique et cathodique et de la membrane étant conservée au cours du procédé.

2. Procédé selon la revendication 1, la pression relative à l'étape b) du fluide de désassemblage étant comprise entre 50 kPa et 5000 kPa, de préférence entre 100 kPa et 500 kPa.

3. Procédé selon la revendication 1 ou 2, la température du fluide de désassemblage à l'étape b) étant comprise entre 10°C et 200°C, de préférence entre 20°C et 120°C.

4. Procédé selon l'une quelconque des revendications précédentes, le fluide de désassemblage à l'étape b) étant à l'état liquide ou à l'état gazeux, de préférence à l'état gazeux, avec en particulier une pression relative du fluide de désassemblage à l'état gazeux comprise entre 100 kPa et 1000 kPa et une température comprise entre 65 °C et 120 °C.

5. Procédé selon l'une quelconque des revendications précédentes, la durée de l'étape b) étant d'une heure au plus, en particulier comprise entre 20 s et 30 min, plus particulièrement entre 5 min et 15 min.

6. Procédé selon l'une quelconque des revendications précédentes, le fluide de désassemblage étant choisi parmi les solvants et leurs mélanges, en particulier parmi les solvants polaires et leurs mélanges, de préférence parmi les solvants polaires protiques et leurs mélanges, notamment parmi les alcools et leurs mélanges.

7. Procédé selon l'une quelconque des revendications précédentes, le fluide de désassemblage étant choisi parmi le diméthylsulfoxyde (DMSO), l'acétone, le N,N-diméthylformamide (DMF), l'acétonitrile, l'acétate d'éthyle, le méthanol, l'éthanol, l'isopropanol, l'eau, l'hexafluoroisopropanol, l'acide formique, l'acide acétique, l'ammoniaque et leurs mélanges, de préférence parmi l'éthanol, l'isopropanol et leur mélange, plus préférentiellement est l'éthanol.

8. Procédé selon l'une quelconque des revendications précédentes, comprenant en outre une étape c), postérieure à l'étape b), au cours de laquelle au moins deux desdites couches et/ou la membrane et au moins une des couches au contact de la membrane entre lesquelles la force de cohésion a été réduite à l'étape b) sont séparées l'une de l'autre.

9. Procédé selon l'une quelconque des revendications précédentes, comprenant en outre une étape d) consécutive à l'étape b) ou à l'étape c) comportant la récupération des couches de diffusion de gaz anodique et cathodique et de la membrane désolidarisées les unes des autres, de préférence des couches de diffusion de gaz anodique et cathodique, des couches anodique et cathodique et de la membrane désolidarisées les unes des autres.

10. Procédé selon l'une quelconque des revendications précédentes, les couches et la membrane de l'assemblage membrane-électrodes présentant une surface, notamment une surface active, supérieure à 1 cm², en particulier supérieure à 1,8 cm², notamment comprise entre 25 cm² et 150 cm².

11. Procédé selon l'une quelconque des revendications précédentes, comprenant en outre la récupération du fluide de désassemblage, le fluide de désassemblage récupéré étant en particulier mis en oeuvre dans un procédé selon l'une quelconque des revendications précédentes.

12. Procédé selon l'une quelconque des revendications précédentes, comprenant en outre une étape e) de lavage de la membrane et/ou des couches de diffusion de gaz anodique et cathodique, de préférence par immersion dans un bain à ultrasons, notamment contenant de l'éthanol.

13. Procédé selon l'une quelconque des revendications précédentes, le procédé comprenant préalablement à l'étape a) une étape de purge de l'assemblage membrane-électrodes par mise en contact dudit assemblage avec un fluide de purge, préférentiellement de l'azote.

14. Procédé selon l'une quelconque des revendications précédentes, l'étape a) comportant la fourniture d'une pile à combustible à membrane d'échange de protons comportant un assemblage membrane-électrodes et à l'étape b), l'assemblage membrane-électrodes étant mis en contact avec le fluide de désassemblage.

15. Procédé selon la revendication précédente, le fluide de désassemblage étant introduit à l'étape b) dans la pile par le ou les canaux d'alimentation en combustible de la pile et/ou par le ou les canaux d'alimentation en oxydant de la pile.
